# EUROPEAN PATENT SPECIFICATION

(11) **EP 4 221 032 B1**
(45) Date of publication and mention of the grant of the patent: **11.02.2026**
(21) Application number: 20955767.7
(22) Date of filing: 30.09.2020
(51) Int. Cl.: H04L 5/00, H04W 28/02, H04W 56/00

(54) **DELAY COMPENSATION METHOD AND APPARATUSES**
VERZÖGERUNGSKOMPENSATIONSVERFAHREN UND -VORRICHTUNGEN
PROCÉDÉ ET APPAREILS DE COMPENSATION DE RETARD

(43) Date of publication of application: 02.08.2023
(73) Proprietor: GUANGDONG OPPO MOBILE TELECOMMUNICATIONS CORP., LTD., Dongguan, Guangdong 523860 (CN)
(72) Inventor: LIANG, Bin, Dongguan, Guangdong 523860 (CN); XU, Jing, Dongguan, Guangdong 523860 (CN); FU, Zhe, Dongguan, Guangdong 523860 (CN)
(74) Representative: Santarelli
(86) International application number: PCT/CN2020/119618
(87) International publication number: WO 2022/067744

(56) References cited:
- EP-A1- 3 923 643
- EP-B1- 2 291 929
- WO-A1-2018/175085
- WO-A1-2020/164512
- CN-A- 103 906 222
- CN-A- 106 454 726
- CN-A- 106 685 623
- CN-A- 111 294 131
- US-A1- 2018 083 694
- US-A1- 2018 167 236
- QUALCOMM INCORPORATED: "Propagation Delay Compensation for Reference Timing Delivery", vol. RAN WG2, no. Electronic; 20200817 - 20200828, 7 August 2020 (2020-08-07), XP051911781, Retrieved from the Internet <URL:https://ftp.3gpp.org/tsg_ran/WG2_RL2/TSGR2_111-e/Docs/R2-2006906.zip> [retrieved on 20200807]
- QUALCOMM INCORPORATED: "RAT-dependent DL and UL NR positioning techniques", vol. RAN WG1, no. Taipei, Taiwan; 20190121 - 20190125, 20 January 2019 (2019-01-20), XP051593762, Retrieved from the Internet <URL:http://www.3gpp.org/ftp/Meetings%5F3GPP%5FSYNC/RAN1/Docs/R1%2D1900916%2Ezip> [retrieved on 20190120]

## Description

### Technical Field

The disclosure relates to the field of mobile communication, and in particular to a delay compensation method and apparatus.

### Description of Related Art

Industrial Internet of Things (IIoT) needs to support the transmission of services in a 5G system, such as factory automation, transport industry, and electrical power distribution. Based on the transmission requirements of delay and reliability, the IIoT introduces the concept of time sensitive networking (TSN) or time sensitive communication (TSC).

In the TSN, lower delay guarantee and higher clock synchronization accuracy need to be provided. For example, the synchronization error must not be less than 900 ns.

Document WO 2018/175085 A1 provides aspects relating to wireless communication systems configured to provide user equipment (UE)-specific slot structures based on the individual propagation delay experienced by each UE. In some examples, the duration of uplink transmissions for a particular UE within a slot may be configured based on the propagation delay between the base station and that particular UE. For example, the duration of an uplink burst and/or an uplink traffic transmission may be configured based on the propagation delay. In addition, a downlink burst within a slot may be configured for a particular UE on the propagation delay experienced by that UE. Downlink traffic transmissions may further be configured for the cell based on the maximum propagation delay experienced by the UEs in the cell.

Document QUALCOMM INCORPORATED: "Propagation Delay Compensation for Reference Timing Delivery", 3GPP DRAFT; R2-2006906, discusses new timing requirements by SA1 and proposes reusing propagation delay measurements used for positioning to compensate for propagation delay at the UE for accurate reference timing delivery for TSN synchronization.

Document EP22919B1 provides a method and arrangement in a base station, a user equipment and a positioning node, for sending and obtaining, respectively, a value of a propagation delay of a signal; the method is characterised by the steps of receiving a signal sent from the user equipment; measuring the value of the signal propagation delay of the received signal; and sending the measured value to the user equipment and/or to a positioning node comprised within the wireless communication system.

Document QUALCOMM INCORPORATED: "RAT-dependent DL and UL NR positioning techniques", 3GPP DRAFT; R1-1900916, discusses study and evaluate potential solutions of positioning technologies based on the above identified requirements, evaluation scenarios/methodologies [RAN1]; the solutions should include at least NR-basedRAT dependent positioning to operate in both FR1 and FR2 whereas other positioning technologies are not precluded; minimum bandwidth target (e.g. 5MHz) of NR with scalability is supported towards general extension for any applications

Document WO2020/164512A1 provides a a method for positioning a terminal device; the method includes: generating, by a terminal device, a first message, where the first message includes one or more pieces of first time difference information, and the first time difference information includes a first time difference and information about a first positioning reference signal pair corresponding to the first time difference, where the first positioning reference signal pair includes a first uplink positioning reference signal and a first downlink positioning reference signal that have an association relationship, and the first time difference is a time difference between a sending time point of the first uplink: positioning reference signal and a receiving time point of the first downlink positioning reference signal; and sending, by the terrminal device, the first message to a network device.

### SUMMARY

Embodiments of the present application provide a delay compensation method and apparatuses and higher clock synchronization accuracy is obtained through the delay compensation method. The invention is set out in the appended set of claims. The present invention is defined in the independent claims, and the preferable features according to the present invention are defined in the dependent claims.

The technical solutions provided by the embodiments of the present application at least include the following beneficial effects:

The first information is reported to the network device through the terminal, the first information is used for assisting the network device to perform delay compensation, and higher clock synchronization accuracy is obtained through the delay compensation method, thereby satisfying more precise time synchronization requirements.

### BRIEF DESCRIPTION OF THE DRAWINGS

In order to more clearly illustrate the technical solutions in the embodiments of the present application, the drawings that need to be used in the description of the embodiments will be briefly introduced below. Obviously, the drawings in the following description are only some embodiments of the present application. For persons skilled in the art, other drawings may also be obtained according to the drawings without creative effort.
FIG. 1 is a block diagram of a communication system provided by an exemplary embodiment of the present application.
Fig.2 is a clock synchronization relationship between a terminal and a network device shown in an exemplary embodiment of the present application.
FIG. 3 is a flowchart of a delay compensation method shown in an exemplary embodiment of the present application.
FIG. 4 is an information format diagram of first information shown in an exemplary embodiment of the present application.
FIG. 5 is another information format diagram of first information shown in an exemplary embodiment of the present application.
FIG. 6 is a flowchart of a delay compensation method shown in an exemplary embodiment of the present application.
FIG. 7 is a flowchart of a delay compensation method shown in an exemplary embodiment of the present application.
FIG. 8 is a flowchart of a delay compensation method shown in an exemplary embodiment of the present application.
FIG. 9 is a flowchart of a delay compensation method shown in an exemplary embodiment of the present application.
FIG. 10 is a time-domain schematic diagram of a delay compensation method shown in an exemplary embodiment of the present application.
FIG. 11 is a flowchart of a delay compensation method shown in an exemplary embodiment of the present application.
FIG. 12 is a block diagram of a delay compensation apparatus shown in an exemplary embodiment of the present application.
FIG. 13 is a block diagram of a delay compensation apparatus shown in an exemplary embodiment of the present application.
FIG. 14 is a block diagram of a communication device shown in an exemplary embodiment of the present application.

### DETAILED DESCRIPTION OF DISCLOSED EMBODIMENTS

In order for the objectives, the technical solutions, and the advantages of the present application to be clearer, the embodiments of the present application will be further described in detail below in conjunction with the drawings.

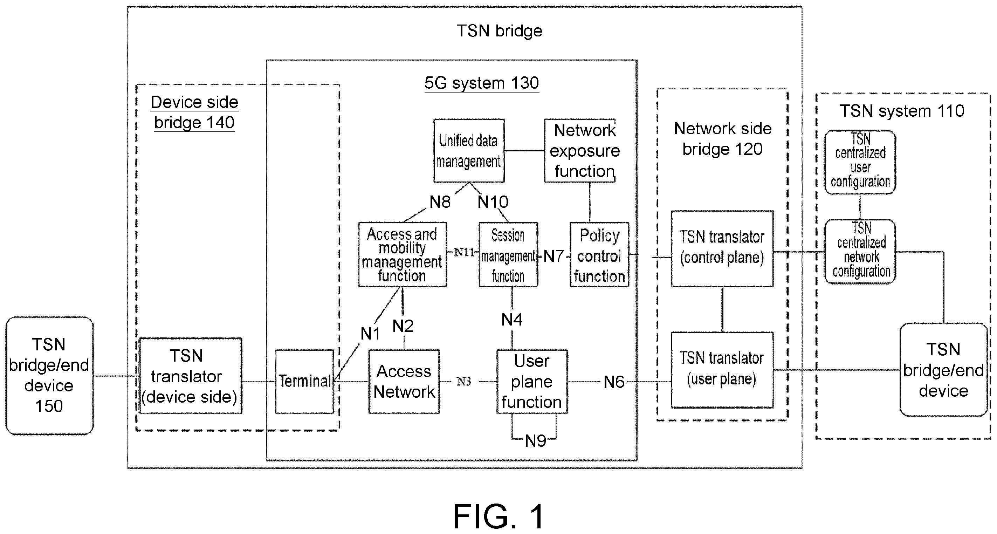

FIG. 1 is a network architecture diagram of a TSN as a TSN bridge through a 5G network. The network architecture includes a TSN system 110, a network side bridge 120, a 5G system 130, a device side bridge 140, and a TSN bridge/end device 150.

The TSN system 110 includes a centralized user configuration (CUC), a centralized network configuration (CNC), and at least one TSN bridge or end device. The TSN system 110 is connected to the network side bridge 120.

The network side bridge 120 includes a control plane TSN translator and a user plane TSN translator. The control plane TSN translator is acted by an application function (AF) and has communication connection with the centralized network configuration in the TSN system 110. There is communication connection between the user plane TSN translator and the TSN bridge or the end device in the TSN system 110.

The 5G system 130 includes a core network, a radio access network (RAN), and a terminal. A user plane of the core network includes a user plane function (UPF). A control plane of the core network includes unified data management (UDM), a network exposure function (NEF), an access and mobility management function (AMF) entity, a session management function (SMF), and a policy control function (PCF).

An N1 interface is a reference point between the terminal and the AMF. An N2 interface is a reference point of the RAN and the AMF, and is used for sending an NAS message, etc. An N3 interface is a reference point between the RAN and the UPF, and is used for transmitting data of the user plane, etc. An N4 interface is a reference point between the SMF and the UPF, and is used for transmitting information such as tunnel identification information of N3 connection, data cache indication information, and a downlink data notification message. An N6 interface is a reference point between the UPF and the user plane TSN translator, and is used for transmitting the data of the user plane, etc. An N8 is a reference point between the UDM and the AMF, an N10 is a reference point between the UDM and the SMF, and an N11 is a reference point between the AMF and the SMF.

There is communication connection between the device side bridge 140 and the terminal in the 5G system 130. The device side bridge 140 includes a device side TSN translator. The device side bridge 140 also has communication connection with the TSN bridge/end device 150.

According to FIG. 1, in the TSN, the 5G system 130 is a path for transmitting a TSN service, so the 5G system needs to support TSN service transmission and support the time synchronization requirements of the TSN, and transmit services within the required time. In response to this, the 5G system 130 needs to provide lower delay guarantee and higher clock synchronization accuracy, so that when an industrial automation service is transmitted in the 5G network, the operation and the connection of each point of mechanical operation are accurate and meet the time requirement.

In the 5G system, TSN time passes through a reference time information (referenceTimeInfo-r16) field in a system information block (SIB) signaling. The reference time information field includes system frame number information, absolute time information, etc., and the indication accuracy is 10 ns.

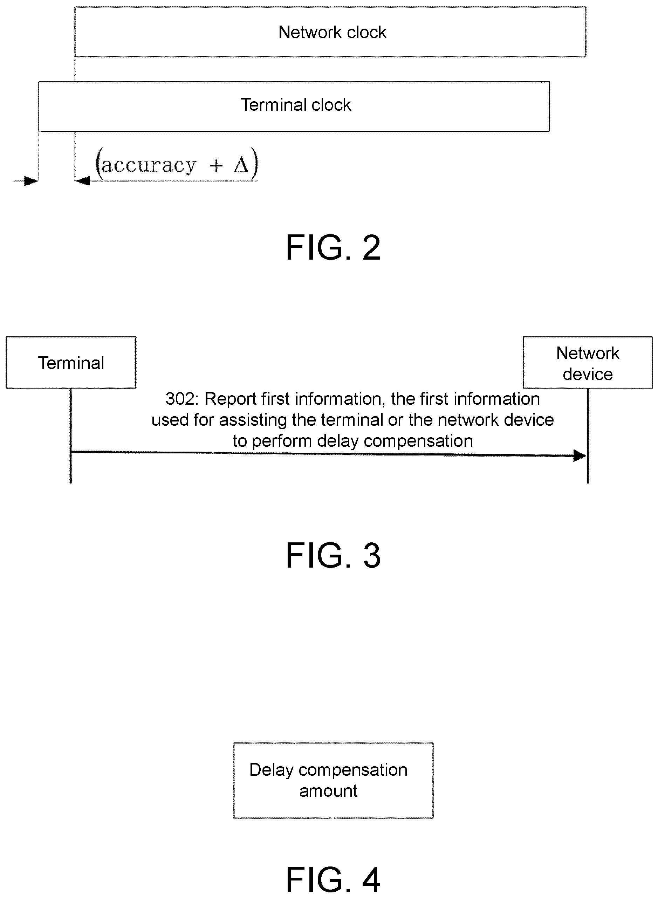

Based on the requirements of TSN service transmission, when the TSN service is transmitted in 5G, the time synchronization accuracy requirement of 1 us needs to be satisfied. As shown in FIG. 2, in terms of an air interface, whether the time accuracy of 1 us can be achieved is related to the time synchronization accuracy notified by the network and the time synchronization accuracy error (delta△) on a UE side. The synchronization error on the terminal side is determined by RAN1, and an error thereof is related to many factors, such as propagation loss, device limitations, etc.

An embodiment of the present application provides a delay compensation solution, which may be referred to the following embodiment.

FIG. 3 shows a flowchart of a delay compensation method provided by an exemplary embodiment of the present application. The embodiment is described by taking the delay compensation method applied to a terminal as an example. Optionally, the terminal is a terminal supporting TSN or TSN service transmission. The method includes the following.

In **Step 302,** the terminal reports first information to a network device, and the first information is used for assisting the terminal or the network device to perform delay compensation.

The first information may also be referred to as delay compensation information, delay reference information, delay compensation reference information, delay information, and other names, which are not limited in the embodiment.

The first information includes time information; a delay compensation amount; or the time information and the delay compensation amount. Optionally, an information content included in the first information is configured by a higher layer signaling or stipulated by a communication protocol.

Exemplarily referring to FIG. 4, the first information includes the delay compensation amount.

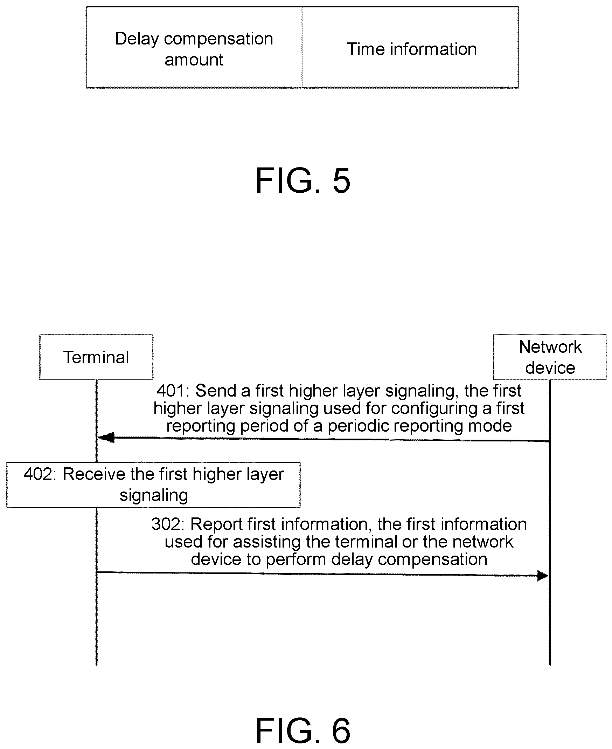

Schematically referring to FIG. 5, the first information includes the delay compensation amount and the time information.

The time information includes at least one of absolute time information of a reference time point and a slot index of a slot where the reference time point is located. Exemplarily, the absolute time information includes year, month, day, hour, minute, second, millisecond, microsecond, etc. Schematically, the reference time point may be a starting time point of a delay compensation period, a time point when the terminal reports the first information, or a starting time point of a latest slot. The embodiment of the present application does not limit the specific location of the reference time point.

The delay compensation amount is a deviation value of delay compensation measured by the terminal. The measurement unit of the deviation value includes any one of milliseconds, microseconds, nanoseconds, and a reference time length. The reference time length may be a time unit Tc or an integer multiple of Tc. Schematically, the delay compensation amount is determined according to a reference signal. The reference signal includes, but not limited to, a sounding reference signal (SRS), a positioning reference signal (PRS), and a demodulation reference signal (DM-RS). The delay compensation amount is determined according to a sending and receiving time difference between an uplink reference signal and a downlink reference signal. The delay compensation amount measured by the terminal may be referred to as a first delay compensation amount, and the delay compensation amount measured by the network device may be referred to as a second delay compensation amount. In an example, the terminal first sends the uplink reference signal to the network device, and then receives the downlink reference signal sent by the network device, and the delay compensation amount is a difference value between a time point when the terminal receives the downlink reference signal minus a time point when the terminal sends the uplink reference signal. In another example, the network device first sends the downlink reference signal to the terminal, and the terminal then sends the uplink reference signal to the network device, and the delay compensation amount is the time point when the terminal sends the uplink reference signal minus the time point when the terminal receives the downlink reference signal. The embodiment of the present application does not limit the specific calculation method of the delay compensation amount.

Specifically, if the time unit is milliseconds and the delay compensation amount is n, it means that the delay compensation amount is n milliseconds. If the time unit is microseconds and the delay compensation amount is n, it means that the delay compensation amount is n microseconds. If the time unit is nanoseconds and the delay compensation amount is n, it means that the delay compensation amount is n nanoseconds. If the time unit is the agreed time unit Tc, and the delay compensation amount is n, it means that the delay compensation amount is n*Tc.

A a reporting mode of the first information includes a periodic reporting mode; a semi-static periodic reporting mode; or a signaling triggered reporting mode.

In summary, in the method provided by the embodiment, the first information is reported to the network device through the terminal, the first information is used for assisting the terminal or the network device to perform delay compensation, and higher clock synchronization accuracy is obtained through the delay compensation method, thereby satisfying more precise time synchronization requirements.

For the periodic reporting mode, before Step 302, Step 401 to Step 402 below are also included, as shown in FIG. 6.

In **Step 401,** the network device sends a first higher layer signaling, and the first higher layer signaling is used for configuring a first reporting period of the periodic reporting mode.

The network device sends the first higher layer signaling to the terminal. Optionally, the first higher layer signaling is a radio resource control (RRC) signaling. The first higher layer signaling carries the first reporting period or the first reporting period and a starting reporting location.

The first reporting period is a period of the periodic reporting mode.

**Step 402,** the terminal receives the first higher layer signaling.

The terminal receives the first higher layer signaling sent by the network device. Optionally, the terminal obtains the first reporting period or the first reporting period and the starting reporting location from the first higher layer signaling. Exemplarily, the terminal starts from the starting reporting location and continues to perform periodic reporting according to the first reporting period.

In summary, the method provided by the embodiment can enable the terminal and the network device to always maintain high clock synchronization accuracy by reporting the delay compensation information through the periodic reporting method.

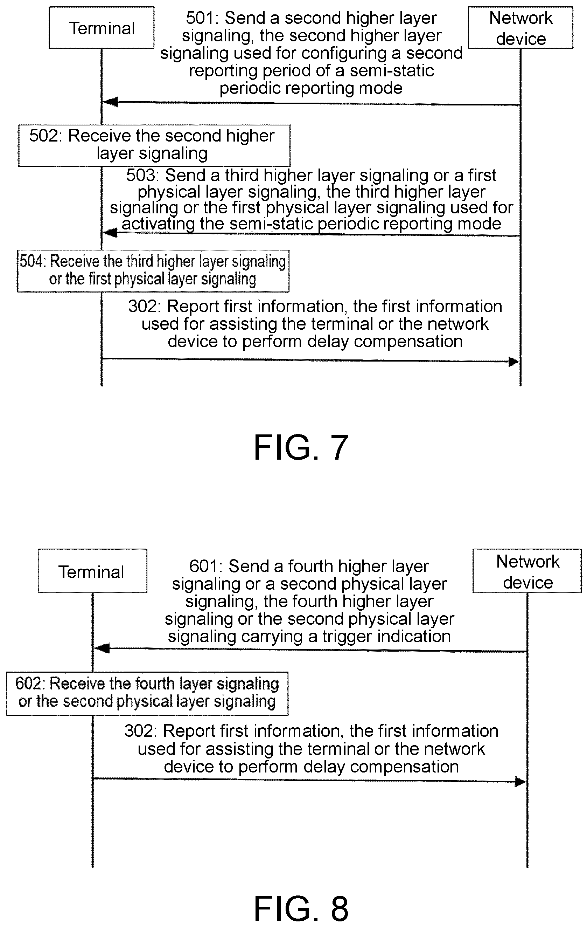

For the semi-static periodic reporting mode, before Step 302, Steps 501 to 503 below are also included, as shown in FIG. 7.

In **Step 501,** the network device sends a second higher layer signaling, and the second higher layer signaling is used for configuring a second reporting period of the semi-static periodic reporting mode.

The network device sends the second higher layer signaling to the terminal. Optionally, the second higher layer signaling is the RRC signaling. The second higher layer signaling carries the second reporting period. The second reporting period is a period of the semi-static periodic reporting mode.

In **Step 502,** the terminal receives the second higher layer signaling;

The terminal receives the second higher layer signaling sent by the network device. The terminal obtains the second reporting period from the second higher layer signaling.

In **Step 503,** the network device sends a third higher layer signaling or a first physical layer signaling, and the third higher layer signaling or the first physical layer signaling is used for activating the semi-static periodic reporting mode.

The network device sends the third higher layer signaling or the first physical layer signaling to the terminal. Optionally, the third higher layer signaling is the RRC signaling, and the first physical layer signaling is a downlink control information (DCI) signaling.

In **Step 504,** the terminal receives the third higher layer signaling or the first physical layer signaling.

The terminal receives the third higher layer signaling or the first physical layer signaling sent by the network device. After receiving an activation indication of the third higher layer signaling or the first physical layer signaling, the terminal continues to perform periodic reporting of the first information according to the second reporting period.

After the terminal continues to report for a certain period of time, the steps below may also be optionally included. The network device also sends the third higher layer signaling or the first physical layer signaling to the terminal, and the third higher layer signaling or the first physical layer signaling is used for deactivating the semi-static periodic reporting mode. After receiving a deactivation indication in the third higher layer signaling or the first physical layer signaling, the terminal stops reporting the first information.

In summary, the method provided by the embodiment can enable the terminal and the network device to always maintain high clock synchronization accuracy within at least a period of time by reporting the delay compensation information through the semi-static periodic reporting method.

For the signaling triggered reporting mode, before Step 302, Step 601 to Step 602 below are also included, as shown in FIG. 8.

In **Step 601,** the network device sends a fourth higher layer signaling or a second physical layer signaling, and the fourth higher layer signaling or the second physical layer signaling carries a trigger indication.

The network device sends the fourth higher layer signaling or the second physical layer signaling to the terminal. The fourth higher layer signaling is the RRC signaling, and the second physical layer signaling is the DCI signaling.

The trigger indication is an indication for triggering the reporting of the first information. Exemplarily, the trigger indication is used for triggering the terminal to report the first information once, or the trigger indication is used for triggering the terminal to report the first information consecutively for n times, where n is an integer greater than 1.

A reporting location of the first information may be configured by the fourth higher layer signaling or the second physical layer signaling, or may be configured by other higher layer signaling. The number of reporting times n is configured by the fourth higher layer signaling or the second physical layer signaling, or may be configured by other higher layer signaling.

In **Step 602,** the terminal receives the fourth higher layer signaling or the second physical layer signaling.

The terminal receives the fourth higher layer signaling or the second physical layer signaling sent by the network device. The terminal obtains the trigger indication from the fourth higher layer signaling or the second physical layer signaling, and reports the first information after receiving the trigger indication.

In summary, the method provided by the embodiment can reduce the number of reporting times between the terminal and the network device by reporting the delay compensation information through the signaling triggered reporting method to save air interface resources.

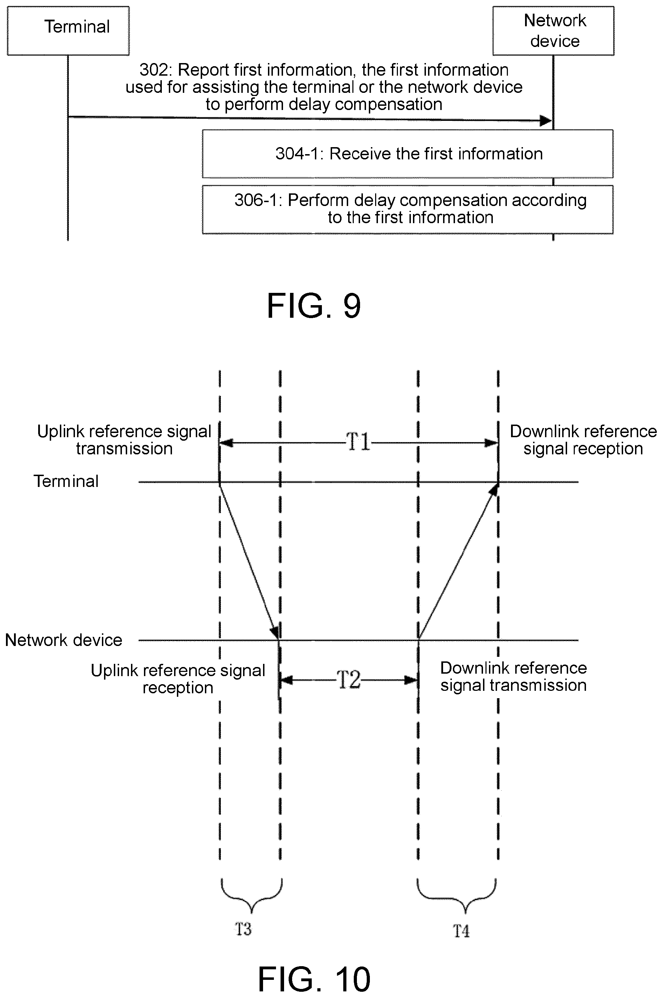

FIG. 9 shows a flowchart of a delay compensation method provided by another exemplary embodiment of the present application. The embodiment is described by taking the delay compensation method applied between a terminal and a network device as an example. Optionally, the terminal and the network device support TSN or TSN service transmission. The method includes the following.

In **Step 302,** the terminal reports first information to the network device.

For an information content of the first information, reference may be made to the embodiment shown in FIG. 3.

The reporting method of the first information may be a periodic reporting method, which may be referred to the embodiment shown in FIG. 6; may also be a semi-static periodic reporting method, which may be referred to the embodiment shown in FIG. 7; and may also be a signaling triggered reporting mode, which may be referred to the embodiment shown in FIG. 8.

In **Step 304-1,** the network device receives the first information reported by the terminal.

In **Step 306-1,** the network device performs delay compensation according to the first information.

The network device obtains at least one of time information and a delay compensation amount from the first information.

**·In a case of obtaining the time information, delay compensation is performed according to the time information.**

The network device determines a delay compensation offset used for actual delay compensation according to the received time information and a receiving time of the first information. The network device performs delay compensation according to the delay compensation offset.

For example, the time information reported by the terminal is a sending time of the first information, and the network device subtracts the sending time of the first information from the receiving time of the first information to obtain the delay compensation offset. For another example, the time information reported by the terminal is a starting time point of a delay compensation period, and an interval between a sending time of second information and a starting location of the delay compensation period is a predetermined duration. The network device adds the starting time point of the delay compensation period to the predetermined duration to obtain the receiving time of the first information, and then subtracts the receiving time of the first information from the sending time of the first information to obtain the delay compensation offset.

**·In a case of obtaining the delay compensation amount, delay compensation is performed according to the delay compensation amount.**

Schematically referring to FIG. 10, assuming that the first delay compensation amount in the first information is a first delay compensation amount T1, the delay compensation amount measured by the network device itself is a second delay compensation amount T2, the network device calculates a delay compensation offset △=T1-T2=T3+T4 for actual delay compensation or calculates a delay compensation offset △=(T1-T2)/2=(T3+T4)/2 according to the first delay compensation amount T1 and the second delay compensation amount T2.

In a case of first sending the uplink reference signal and then sending the downlink reference signal, the first delay compensation amount T1 = the time point when the terminal receives the downlink reference signal - the time point when the terminal sends the uplink reference signal. The second delay compensation amount T2 = the time point when the network device receives the uplink reference signal - the time point when the network device sends the downlink reference signal.

In a case of first sending the downlink reference signal and then sending the uplink reference signal, the first delay compensation amount T1 = the time point when the terminal sends the uplink reference signal - the time point when the terminal receives the downlink reference signal. The second delay compensation amount T2 = the time point when the network device sends the downlink reference signal - the time point when the network device receives the uplink reference signal.

The first delay compensation amount is the delay compensation amount reported by the terminal, and the second delay compensation amount is the delay compensation amount measured by the network device.

**·In a case of obtaining the time information and the delay compensation amount, delay compensation is performed according to the time information and the delay compensation amount.**

The network device determines a delay compensation offset 1 according to the received time information and the receiving time of the first information. According to the received first delay compensation amount T1 and second delay compensation amount T2, a delay compensation offset 2 used for actual delay compensation is calculated. An average value or a weighted value of the delay compensation offset 1 and the delay compensation offset 2 is used as a delay compensation offset 3. The network device performs delay compensation according to the delay compensation offset 3.

In summary, the method provided by the embodiment can reduce the number of signaling interactions between the terminal and the network device by performing delay compensation through the network device according to the first information to save air interface resources.

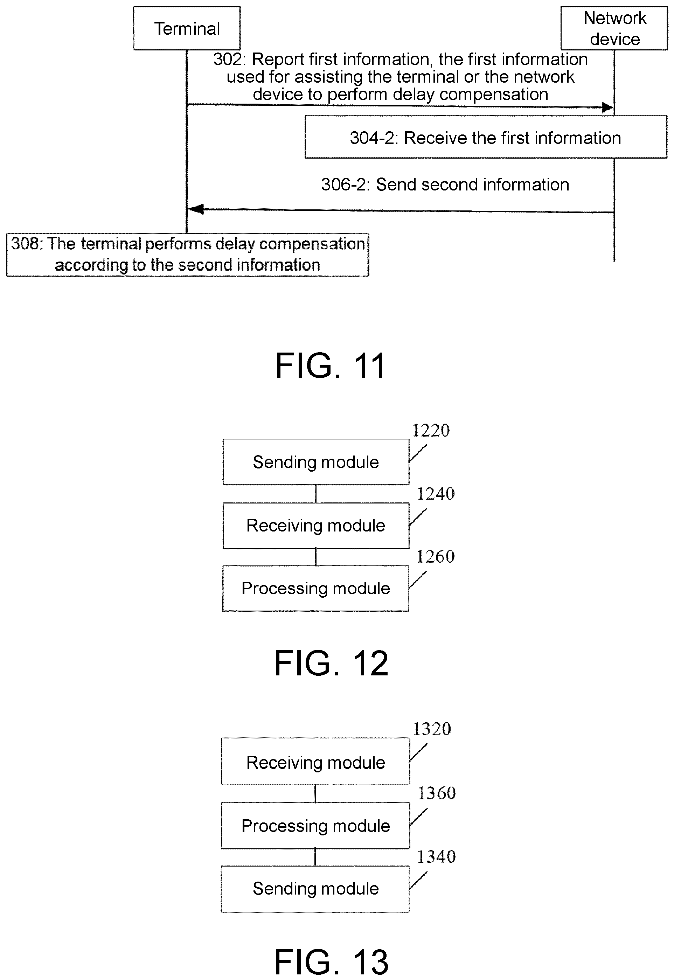

FIG. 11 shows a flowchart of a delay compensation method provided by another example of the present application. The example is described by taking the delay compensation method applied between a terminal and a network device as an example. The method includes the following.

In **Step 302,** the terminal reports first information to the network device.

For an information content of the first information, reference may be made to the embodiment shown in FIG. 3.

Optionally, the reporting method of the first information may be a periodic reporting method, which may be referred to the embodiment shown in FIG. 6; may also be a semi-static periodic reporting method, which may be referred to the embodiment shown in FIG. 7; and may also be a signaling triggered reporting mode, which may be referred to the embodiment shown in FIG. 8.

In **Step 304-2,** the network device receives the first information reported by the terminal.

In **Step 306-2,** the network device sends second information to the terminal according to the first information.

The second information may also be referred to as a delay compensation indication, a delay reference indication, a delay compensation reference indication, a delay indication, and other names, which are not limited in the embodiment.

The second information is determined according to the first information. Optionally, the second information carries at least one of an indication of whether to perform delay compensation and a delay compensation offset. For example, the second information carries an indication of not performing delay compensation. For another example, the second information carries the delay compensation offset. For another example, the second information carries an indication of performing delay compensation and the delay compensation offset.

Optionally, the delay compensation offset is determined according to first information. For the determination method of the delay compensation offset, reference may be made to the description of Step 306-1.

I**n Step 308,** the terminal performs delay compensation according to the second information.

When the second information is used to indicate delay compensation, the terminal performs delay compensation according to the delay compensation offset in the second information.

In summary, the method provided by the embodiment can save computing resources of the network device when performing delay compensation through the terminal according to the second information.

FIG. 12 shows a block diagram of a delay compensation apparatus provided by an exemplary embodiment of the present application. The delay compensation apparatus may be implemented as all or a part of a terminal. Alternatively, the delay compensation apparatus may be applied in the terminal. The apparatus includes:
a sending module 1220, used for reporting first information to the network device, and the first information being used for assisting the apparatus or the network device to perform delay compensation.

In an optional design of the present application, the first information includes time information; a delay compensation amount; or the time information and the delay compensation amount.

In an optional design of the present application, the time information includes at least one of the following:
absolute time information of a reference time point;
a slot index of a slot where the reference time point is located.

In an optional design of the present application, the delay compensation amount is determined according to a reference signal. The reference signal includes at least one of an SRS, a PRS, and a DMRS.

In an optional design of the present application, the delay compensation amount is a deviation value of delay compensation, and the measurement unit of the deviation value includes one of the following:
milliseconds, microseconds, nanoseconds, and a reference time length.

In an optional design of the present application, the reporting mode of the first information includes
a periodic reporting mode;
   or
a semi-static periodic reporting mode;
   or
a signaling triggered reporting mode.

In an optional design of the present application, the apparatus further includes:
a receiving module 1240, used for receiving a first higher layer signaling, and the first higher layer signaling being used for configuring a first reporting period of the periodic reporting mode.

In an optional design of the present application, the apparatus further includes:
the receiving module 1240, used for receiving a second higher layer signaling, and the second higher layer signaling being used for configuring a second reporting period of the semi-static periodic reporting mode;
the receiving module 1240, used for receiving a third higher layer signaling or a first physical layer signaling, and the third higher layer signaling or the first physical layer signaling being used for activating or deactivating the semi-static periodic reporting mode.

In an optional design of the present application, the apparatus further includes:
the receiving module 1240, used for receiving a fourth higher layer signaling or a second physical layer signaling, the fourth higher layer signaling or the second physical layer signaling carrying a trigger signaling.

In an optional design of the present application, the apparatus further includes:
the receiving module 1240, used for receiving second information;
a processing module 1260, used for performing delay compensation according to the second information.

FIG. 13 shows a block diagram of a delay compensation apparatus provided by an exemplary embodiment of the present application. The delay compensation apparatus may be implemented as all or a part of a network device. Alternatively, the delay compensation apparatus may be applied in the network device. The apparatus includes:
a receiving module 1320, used for receiving first information reported by a terminal, and the first information being used for assisting the terminal or the network device to perform delay compensation.

In an optional design of the present application, the first information includes time information; a delay compensation amount; or the time information and the delay compensation amount.

In an optional design of the present application, the time information includes at least one of the following: absolute time information; and a slot index.

In an optional design of the present application, the delay compensation amount is determined according to a reference signal. The reference signal includes at least one of an SRS, a PRS, and a DMRS.

In an optional design of the present application, the delay compensation amount is a deviation value delay compensation. The measurement unit of the deviation value includes one of the following: milliseconds, microseconds, nanoseconds, and a reference time length.

In an optional design of the present application, the reporting mode of the first information includes:
a periodic reporting mode; a semi-static periodic reporting mode; or a signaling triggered reporting mode.

In an optional design of the present application, the apparatus further includes:
a sending module 1340, used for sending a first higher layer signaling, and the first higher layer signaling being used for configuring a first reporting period of the periodic reporting mode.

In an optional design of the present application, the apparatus further includes:
the sending module 1340, used for sending a second higher layer signaling, and the second higher layer signaling being used for configuring a second reporting period of the semi-static periodic reporting mode;
the sending module 1340, used for sending a third higher layer signaling or a first physical layer signaling, and the third higher layer signaling or the first physical layer signaling being used for activating or deactivating the semi-static periodic reporting mode.

In an optional design of the present application, the apparatus further includes:
the sending module 1340, used for sending a fourth higher layer signaling or a second physical layer signaling, and the fourth higher layer signaling or the second physical layer signaling carrying a trigger signaling.

In an optional design of the present application, the apparatus further includes:
a processing module 1360, used for performing delay compensation according to the first information.

In an optional design of the present application, the apparatus further includes:
the sending module 1340, used for sending second information according to the first information, and the second information being used for instructing the terminal to perform delay compensation.

In an optional design of the present application, the second information carries at least one of the following: whether to perform delay compensation; and a delay compensation amount.

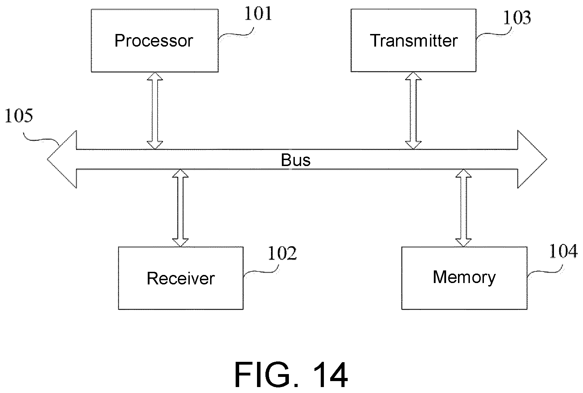

FIG. 14 shows a schematic structural diagram of a communication device (a terminal or a network device) provided by an example of the present application. The communication device includes a processor 101, a receiver 102, a transmitter 103, a memory 104, and a bus 105.

The processor 101 includes one or more processing cores, and the processor 101 executes various functional applications and information processing through running a software program and a module.

The receiver 102 and the transmitter 103 may be implemented as a communication assembly, and the communication assembly may be a communication chip.

The memory 104 is connected to the processor 101 through the bus 105.

The memory 104 may be used to store at least one command, and the processor 101 is used to execute the at least one command to implement each step of the delay compensation method mentioned in the above method embodiments.

In addition, the memory 104 may be implemented by any type of volatile or non-volatile storage device or a combination thereof, and the volatile or non-volatile storage device includes, but not limited to, a magnetic disk or an optical disk, an electrically-erasable programmable read only memory (EEPROM), an erasable programmable read only memory (EPROM), a static random access memory (SRAM), a read-only memory (ROM), a magnetic memory, a flash memory, and a programmable read-only memory (PROM).

In an example, a computer-readable storage medium is also provided. The computer-readable storage medium stores at least one command, at least one program, a code set, or a command set. The at least one command, the at least one program, the code set, or the command set is loaded and executed by the processor to implement the delay compensation method executed by the terminal or the network device provided in the above method embodiments.

In an example, a computer program product or a computer program is also provided. The computer program product or the computer program includes a computer command. The computer command is stored in a computer-readable storage medium. A processor of a communication device reads the computer command from the computer-readable storage medium, and the processor executes the computer command, so that the communication device executes the delay compensation method described in the above aspect.

Persons of ordinary skill in the art may understand that all or a part of the steps in the above embodiments may be completed through hardware or may be completed by instructing related hardware through a program. The program may be stored in a computer-readable storage medium. The storage medium may be a read-only memory, a magnetic disk, an optical disk, etc.

## Claims

1. A delay compensation method, applied in a terminal, the method comprising:
receiving a fourth higher layer signaling from a network device, wherein the fourth higher layer signaling carries a trigger indication for triggering the terminal to report first information and configures a number of consecutive reporting times n, and the fourth higher layer signaling is a radio resource control, RRC, signaling;
reporting the first information to the network device based on the fourth higher layer signaling, the first information being used for assisting the network device to perform delay compensation;
wherein the first information comprises a delay compensation amount, wherein said delay compensation amount is determined according to a reference signal and wherein said delay compensation amount is a sending and receiving time difference between an uplink reference signal and a downlink reference signal, and the uplink reference signal and the downlink reference signal are exchanged between the terminal and the network device.

2. The method according to claim 1, wherein the reference signal comprises at least one of a sounding reference signal, SRS, a positioning reference signal, PRS, and a demodulation reference signal, DMRS.

3. A delay compensation apparatus for a terminal, the apparatus comprising:
a receiving module (1240), used for receiving a fourth higher layer signaling from a network device, wherein the fourth higher layer signaling carries a trigger indication for triggering the terminal to report first information and configures a number of consecutive reporting times n, and the fourth higher layer signaling is a radio resource control, RRC, signaling;
a sending module (1220), used for reporting the first information to the network device based on the fourth higher layer signaling, the first information being used for assisting the network device to perform delay compensation;
wherein the first information comprises a delay compensation amount, wherein said delay compensation amount is determined according to a reference signal and wherein said delay compensation amount is a sending and receiving time difference between an uplink reference signal and a downlink reference signal, and the uplink reference signal and the downlink reference signal are exchanged between the terminal and the network device.

4. The apparatus according to claim 3, wherein the reference signal comprises at least one of a sounding reference signal, SRS, a positioning reference signal, PRS, and a demodulation reference signal, DMRS.

5. A delay compensation apparatus for a network device, the apparatus comprising:
a sending module (1340), used for sending a fourth higher layer signaling to a terminal, wherein the fourth higher layer signaling carries a trigger indication for triggering the terminal to report first information and configures a number of consecutive reporting times n, and the fourth higher layer signaling is a radio resource control, RRC, signaling;
a receiving module (1320), used for receiving the first information reported by the terminal based on the fourth higher layer signaling, the first information being used for assisting the apparatus to perform delay compensation;
wherein the first information comprises a delay compensation amount, wherein said delay compensation amount is determined according to a reference and wherein said delay compensation amount is a sending and receiving time difference between an uplink reference signal and a downlink reference signal, and the uplink reference signal and the downlink reference signal are exchanged between the terminal and the network device.

6. The apparatus according to claim 5, wherein the reference signal comprises at least one of a sounding reference signal, SRS, a positioning reference signal, PRS, and a demodulation reference signal, DMRS.

## Patentansprüche

1. Verzögerungskompensationsverfahren, das auf ein Endgerät angewendet wird, wobei das Verfahren umfasst:
Empfangen einer Signalisierung einer vierten höheren Schicht von einer Netzwerkvorrichtung, wobei die Signalisierung einer vierten höheren Schicht eine Auslöseangabe zum Auslösen des Endgeräts, damit es erste Informationen meldet, überträgt und eine Anzahl von aufeinanderfolgenden Meldezeiten n konfiguriert, und die Signalisierung einer vierten höheren Schicht eine Funkressourcensteuerungs-, RRC, Signalisierung ist;
Melden der ersten Informationen an die Netzwerkvorrichtung basierend auf der Signalisierung einer vierten höheren Schicht, wobei die ersten Informationen dazu verwendet werden, die Netzwerkvorrichtung dabei zu unterstützen, die Verzögerungskompensation auszuführen;
wobei die ersten Informationen einen Verzögerungskompensationsbetrag umfassen, wobei der Verzögerungskompensationsbetrag gemäß einem Referenzsignal bestimmt wird, und wobei der Verzögerungskompensationsbetrag eine Sende- und Empfangszeitdifferenz zwischen einem Uplink-Referenzsignal und einem Downlink-Referenzsignal ist, und das Uplink-Referenzsignal und das Downlink-Referenzsignal zwischen dem Endgerät und der Netzwerkvorrichtung ausgetauscht werden.

2. Verfahren nach Anspruch 1, wobei das Referenzsignal mindestens eines von einem Sondierungsreferenzsignal, SRS, einem Positionierungsreferenzsignal, PRS, und einem Demodulationsreferenzsignal, DMRS, umfasst.

3. Verzögerungskompensationsgerät für ein Endgerät, wobei das Gerät umfasst:
ein Empfangsmodul (1240), das zum Empfangen einer Signalisierung einer vierten höheren Schicht von einer Netzwerkvorrichtung verwendet wird, wobei die Signalisierung einer vierten höheren Schicht eine Auslöseangabe zum Auslösen des Endgeräts, damit es erste Informationen meldet, überträgt und eine Anzahl von aufeinanderfolgenden Meldezeiten n konfiguriert, und die Signalisierung einer vierten höheren Schicht eine Funkressourcensteuerungs-, RRC, Signalisierung ist;
ein Sendemodul (1220), das zum Melden der ersten Informationen an die Netzwerkvorrichtung basierend auf der Signalisierung einer vierten höheren Schicht verwendet wird, wobei die ersten Informationen dazu verwendet werden, die Netzwerkvorrichtung dabei zu unterstützen, eine Verzögerungskompensation auszuführen;
wobei die ersten Informationen einen Verzögerungskompensationsbetrag umfassen, wobei der Verzögerungskompensationsbetrag gemäß einem Referenzsignal bestimmt wird, und wobei der Verzögerungskompensationsbetrag eine Sende- und Empfangszeitdifferenz zwischen einem Uplink-Referenzsignal und einem Downlink-Referenzsignal ist, und das Uplink-Referenzsignal und das Downlink-Referenzsignal zwischen dem Endgerät und der Netzwerkvorrichtung ausgetauscht werden.

4. Gerät nach Anspruch 3, wobei das Referenzsignal mindestens eines von einem Sondierungsreferenzsignal, SRS, einem Positionierungsreferenzsignal, PRS, und einem Demodulationsreferenzsignal, DMRS, umfasst.

5. Verzögerungskompensationsgerät für eine Netzwerkvorrichtung, wobei das Gerät umfasst:
ein Sendemodul (1340), das zum Senden einer Signalisierung einer vierten höheren Schicht an ein Endgerät verwendet wird, wobei die Signalisierung einer vierten höheren Schicht eine Auslöseangabe zum Auslösen des Endgeräts, damit es erste Informationen meldet, überträgt, und eine Anzahl von aufeinanderfolgenden Meldezeiten n konfiguriert, und die Signalisierung einer vierten höheren Schicht eine Funkressourcensteuerungs-, RRC, Signalisierung ist;
ein Empfangsmodul (1320), das zum Empfangen der ersten Informationen, die von dem Endgerät basierend auf der Signalisierung einer vierten höheren Schicht gemeldet werden, verwendet wird, wobei die ersten Informationen dazu verwendet werden, das Gerät dabei zu unterstützen, eine Verzögerungskompensation auszuführen;
wobei die ersten Informationen einen Verzögerungskompensationsbetrag umfassen, wobei der Verzögerungskompensationsbetrag gemäß einer Referenz bestimmt wird, und wobei der Verzögerungskompensationsbetrag eine Sende- und Empfangszeitdifferenz zwischen einem Uplink-Referenzsignal und einem Downlink-Referenzsignal ist, und das Uplink-Referenzsignal und das Downlink-Referenzsignal zwischen dem Endgerät und der Netzwerkvorrichtung ausgetauscht werden.

6. Gerät nach Anspruch 5, wobei das Referenzsignal mindestens eines von einem Sondierungsreferenzsignal, SRS, einem Positionierungsreferenzsignal, PRS, und einem Demodulationsreferenzsignal, DMRS, umfasst.

## Revendications

1. Procédé de compensation de retard, appliqué dans un terminal, le procédé comprenant :
la réception d'une quatrième signalisation de couche supérieure en provenance d'un dispositif réseau, dans lequel la quatrième signalisation de couche supérieure transporte une indication de déclencheur pour le déclenchement le terminal afin qu'il signale des premières informations, et configure un nombre d'occurrences de signalement consécutives n, et la quatrième signalisation de couche supérieure est une signalisation de commande de ressource radio, RRC ;
le signalement des premières informations au dispositif réseau sur la base de la quatrième signalisation de couche supérieure, les premières informations étant utilisées pour aider le dispositif réseau à réaliser une compensation de retard ;
dans lequel les premières informations comprennent une quantité de compensation de retard, dans lequel ladite quantité de compensation de retard est déterminée selon un signal de référence et dans lequel ladite quantité de compensation de retard est une différence de temps d'envoi et de réception entre un signal de référence de liaison montante et un signal de référence de liaison descendante, et le signal de référence de liaison montante et le signal de référence de liaison descendante sont échangés entre le terminal et le dispositif réseau.

2. Procédé selon la revendication 1, dans lequel le signal de référence comprend au moins l'un parmi un signal de référence de sondage, SRS, un signal de référence de positionnement, PRS, et un signal de référence de démodulation, DMRS.

3. Appareil de compensation de retard pour un terminal, l'appareil comprenant :
un module de réception (1240), utilisé pour la réception d'une quatrième signalisation de couche supérieure en provenance d'un dispositif réseau, dans lequel la quatrième signalisation de couche supérieure transporte une indication de déclencheur pour le déclenchement le terminal afin qu'il signale des premières informations, et configure un nombre d'occurrences de signalement consécutives n, et la quatrième signalisation de couche supérieure est une signalisation de commande de ressource radio, RRC ;
un module d'envoi (1220), utilisé pour le signalement des premières informations au dispositif réseau sur la base de la quatrième signalisation de couche supérieure, les premières informations étant utilisées pour aider le dispositif réseau à réaliser une compensation de retard ;
dans lequel les premières informations comprennent une quantité de compensation de retard, dans lequel ladite quantité de compensation de retard est déterminée selon un signal de référence et dans lequel ladite quantité de compensation de retard est une différence de temps d'envoi et de réception entre un signal de référence de liaison montante et un signal de référence de liaison descendante, et le signal de référence de liaison montante et le signal de référence de liaison descendante sont échangés entre le terminal et le dispositif réseau.

4. Appareil selon la revendication 3, dans lequel le signal de référence comprend au moins l'un parmi un signal de référence de sondage, SRS, un signal de référence de positionnement, PRS, et un signal de référence de démodulation, DMRS.

5. Appareil de compensation de retard pour un dispositif réseau, l'appareil comprenant :
un module d'envoi (1340), utilisé pour l'envoi d'une quatrième signalisation de couche supérieure à un terminal, dans lequel la quatrième signalisation de couche supérieure transporte une indication de déclencheur pour le déclenchement le terminal afin qu'il signale des premières informations, et configure un nombre d'occurrences de signalement consécutives n, et la quatrième signalisation de couche supérieure est une signalisation de commande de ressource radio, RRC ;
un module de réception (1320), utilisé pour la réception des premières informations signalées par le terminal sur la base de la quatrième signalisation de couche supérieure, les premières informations étant utilisées pour aider l'appareil à réaliser une compensation de retard ;
dans lequel les premières informations comprennent une quantité de compensation de retard, dans lequel ladite quantité de compensation de retard est déterminée selon une référence et dans lequel ladite quantité de compensation de retard est une différence de temps d'envoi et de réception entre un signal de référence de liaison montante et un signal de référence de liaison descendante, et le signal de référence de liaison montante et le signal de référence de liaison descendante sont échangés entre le terminal et le dispositif réseau.

6. Appareil selon la revendication 5, dans lequel le signal de référence comprend au moins l'un parmi un signal de référence de sondage, SRS, un signal de référence de positionnement, PRS, et un signal de référence de démodulation, DMRS.
